# EUROPÄISCHE PATENTANMELDUNG

(11) **EP 1 199 618 A2**
(43) Veröffentlichungstag der Anmeldung: **24.04.2002**
(21) Anmeldenummer: 01122060.5
(22) Anmeldetag: 14.09.2001
(51) Int. Cl.: G05B 19/042, G05B 19/418

(54) **Verfahren zur Organisation eines Prozesses mit wenigstens einer Prozesseinrichtung zur Durchführung eines vorgebbaren Teilprozesses**

(30) Priorität: 16.10.2000 DE 10051130
(71) Anmelder: PHOENIX CONTACT GmbH & Co. Kg, 32825 Blomberg (DE)
(72) Erfinder: Kalhoff, Johannes, Dipl.-Ing., 32825 Blomberg (DE)
(74) Vertreter: Herden, Andreas F.

(57) **Zusammenfassung**

Die Erfindung betrifft die Organisation netzwerkweiter Applikationen, wobei eine Aufgabe der Erfindung darin besteht, eine Möglichkeit aufzuzeigen, mit welcher kommende Anforderungen von über ein Netzwerk zusammen geschalteten, dezentralen Steuerungen einfach und kosteneffizient mit einem hohen Wirkungsgrad umgesetzt werden können.

Hierzu schlägt die Erfindung ein Verfahren, ein System sowie ein Computerprogramm vor, um zur durchgängigen Unterstützung der Organisation eines Prozesses (3, 3b-3e) mit wenigstens einer Prozesseinrichtung (2a-2i, 4, 4a, 4b, 5, 5a-5d) zur Durchführung vorgebbarer Teilprozesse (3b-3e) Teilprozess-spezifische Prozessstruktur-Informationen (6) in Abhängigkeit des zu organisierenden Prozesses (3, 3b-3e) derart zu erfassen und abzulegen, dass diese in Abhängigkeit vorgebbarer Teilprozesse (3b-3e) beziehungsweise basierend auf einer jeweiligen Organisationsphase genutzt werden können.

## Beschreibung

Die Erfindung betrifft ein Verfahren zur Organisation eines Prozesses mit wenigstens einer Prozesseinrichtung zur Durchführung eines vorgebbaren Teilprozesses sowie ein zur Durchführung des Verfahrens geeignetes System und Computerprogramm.

Im Zuge der stetig zunehmenden Automatisierungstechnik sowie der immer leistungsfähiger werdenden Informationstechnologie wird auf vielen Gebieten daran gearbeitet, Prozesse unterschiedlichster Art zunehmend dezentralisiert zu strukturieren. So ist davon auszugehen, dass in der Zukunft die für die Prozesse notwendigen Steuerungssysteme wesentlich dezentraler ausgebildet beziehungsweise einzelnen Teilprozessen zugeordnet werden, als dieses heutzutage technisch beziehungsweise aufgrund eines noch zum Teil großen Kostenaufwandes möglich ist.

Zwar werden bereits heute einzelne Steuerungskomponenten immer modularer ausgebildet und weisen häufig schon zugeordnete Bedienungseinrichtungen auf, mit welchen eine netzwerkweite Programmiermöglichkeit der Steuerungskomponenten erreicht wird. Darüber hinaus sind jedoch bis heute nur ungenügende Mechanismen bereitgestellt, um einen netzwerkweiten Zugriff insbesondere auf Variablen zu ermöglichen beziehungsweise bereit zu stellen und/oder eine Netzwerk gerechte beziehungsweise Netzwerk integrierende Projektierung, Programmierung, Bedienung und/oder Dokumentation zu gewährleisten. Zwar werden viele Ansätze und Ideen zum rein dezentralen Netzwerk seit einigen Jahren propagiert, bei den heute vorhandenen Applikationen und/oder Entwicklungen finden diese jedoch noch keine Basis. Eine Ursache hierfür ist insbesondere darin begründet, dass im wesentlichen alle vorhandenen Netzwerksysteme, die insbesondere auf hochspezialisierte Anforderungen einzelner Branchenzweige stark fokussiert sind, an ihre Leistungsgrenze herankommen. Folglich müssen die bisher eingesetzten Netzwerksysteme im wesentlichen vollständig neu organisiert werden, um kurz- bis mittelfristig einen stabilen Lösungsansatz zur Verfügung stellen zu können.

Insbesondere auf den Gebieten der Steuerungssysteme und/oder -komponenten werden zwar heute bereits diverse unterschiedliche, neue Ansätze vorangetrieben, jedoch basieren diese im Wesentlichen alle zur Zeit im Entstehen begriffenen Ansätze in der Regel weiterhin auf einem zentralistischen Ansatz.

Aufgabe der Erfindung ist es somit, eine Möglichkeit aufzuzeigen, mit welcher kommende Anforderungen von über ein Netzwerk zusammen geschalteten, dezentralen Steuerungen einfach und kosteneffizient mit einem hohen Wirkungsgrad umgesetzt werden können.

Die erfindungsgemäße Lösung der Aufgabe ist bereits durch ein Verfahren mit den Merkmalen des Anspruchs 1, ein System mit den Merkmalen des Anspruchs 7 beziehungsweise ein Computerprogramm mit dem Merkmalen des Anspruchs 16 gekennzeichnet.

Vorteilhafte und/oder bevorzugte Ausführungsformen und/oder Weiterbildungen sind Gegenstand der jeweiligen Unteransprüche.

Erfindungsgemäß ist somit vorgesehen zur Prozessorganisation mit wenigstens einer zur Durchführung eines vorgebbaren Teilprozesses umfassten Prozesseinrichtung zunächst Teiprozess-spezifische Prozessstruktur-Informationen in Abhängigkeit des zu organisierenden Prozesses derart zu erfassen und in einer Speichereinrichtung abzulegen, dass in Abhängigkeit ausgewählter Teilprozesse die abgelegten, entsprechenden Prozessstruktur-Informationen basierend auf einer jeweiligen Organisationsphase zur Nutzung abrufbar sind.

Von Vorteil hierbei ist insbesondere, dass im wesentlichen unabhängig von der jeweiligen Organisationsphase, dass heisst im wesentlichen unabhängig davon, ob es sich beispielsweise um die Planungs-, Erstellungs- oder Betriebsphase handelt, zu jeder Teilprozess-spezifischen Prozessstruktur eine freie Zugänglichkeit besteht. Mit anderen Worten können die Prozessstruktur-Informationen nach dem erfindungsgemäßen Verfahren nunmehr erstmals autonom und/oder in Kombination, beispielsweise basierend auf miteinander verbundenen Teilprozessen je nach Organisationsphase abgerufen und bearbeitet, dargestellt und/oder für das unmittelbare Betreiben der entsprechenden Prozesseinrichtung eingesetzt werden.

Die erfindungsgemäße Lösung baut folglich auf der Idee auf, dass die Prozesseinrichtungen zur Durchführung von Teilprozessen selbst die Kernelemente eines jeweiligen Prozesses bilden und Träger einer Teilprozess-spezifischen Funktion im wesentlichen unabhängig von der zur Verfahrensdurchführung eingesetzten Systemstruktur sind. Eine hierauf basierende Erfassung von den jeweiligen Teilprozess-spezifischen Prozessstruktur-Informationen, wodurch infolge eine individuelle Zuordnung zu im Wesentlichen jeder einzelnen, den Prozess beeinflussenden Prozesseinrichtung gewährleistet ist, unterstützt folglich durchgängig, dass heisst in jeder Phase eine zentrale bis hin zu einer dezentral aufgebauten Struktur des zu organisierenden Prozesses.

Insbesondere, um eine eindeutige Zuordenbarkeit zwischen den einzelnen Prozessstruktur-Informationen und den zugehörigen Teilprozessen, einschließlich der zu deren Durchführung vorgesehenen Prozesseinrichtungen sicherzustellen, beinhaltet das Erfassen der Prozessstruktur-Informationen in bevorzugter Ausgestaltung das Erfassen von mit einander in Beziehung stehenden Teilprozessen, wie insbesondere eine Verknüpfung einzelner Prozessstruktur-Informationen hinsichtlich zusammengehörender und/oder voneinander abhängiger Teilprozessabschnitte, das Erfassen von physikalischen Charakteristika, wie beispielsweise die Funktion, Tätigkeit und/oder Aufgabe der Prozesseinrichtung und/oder deren Einordnung innerhalb des Prozesses und/oder das Erfassen von logischen Charakteristika, beispielsweise in Form von Prozesseinrichtungs-spezifischen, insbesondere ob es sich um eine Sensor- und/oder Aktoreinrichtung handelt, welche Variablen beziehungsweise Parameter eingelesen werden müssen beziehungsweise ausgegeben werden und/oder systemspezifischer Parameter, wie beispielsweise das zeitliche Verhalten innerhalb des durchzuführenden Prozesses, wobei in zweckmäßiger Weise alle vorgenannten Strukturelemente unter Berücksichtigung jeweiliger anwendungsbezogener Sicherheitsaspekte identifiziert werden.

In vorteilhafter Ausgestaltung ist vorgesehen, die Prozessstruktur-Informationen einer der den entsprechenden Teilprozess durchzuführenden Prozesseinrichtung zugeordneten Steuerungseinrichtung direkt zuzuführen. Eine solche Steuerungseinrichtung kann unter Einsatz der Mechatronik von der Prozesseinrichtung selbst umfasst, oder der Prozesseinrichtung als zusätzliches Element zugeordnet sein. Durch die Einbindung der Prozesseinrichtung selbst, gegebenenfalls über das der Prozesseinrichtung zusätzlich zugeordnete Steuerungselement in das Gesamtsteuerungskonzept wird eine dezentrale Steuerung des zu organisierenden Prozesses wesentlich unterstützt und eine übergeordnete Steuerung wird in letzter Konsequenz nicht mehr benötigt. Hierdurch wird erreicht, dass ein zu organisierender Prozess auf einfache Weise anwendungsspezifisch durch einzelne Teilprozesse beziehungsweise durch die, die einzelnen Teilprozesse durchzuführenden Prozesseinrichtungen flexibel, dass heisst insbesondere modular, erweiterbar und/oder änderbar ist. Eine übergeordnete Steuerung, muss nicht mehr im Vorfeld beziehungsweise zu jeder Zeit mittels eines zu implementierenden komplexen Gesamtsteuerungsprogramms Kenntnis über jeden Teilprozess beziehungsweise jeder durchzuführenden Prozessoreinrichtung haben, da im wesentlichen jeder Teilprozess dezentral über die der durchzuführenden Prozessoreinrichtung zugeordneten Steuereinrichtung steuerbar ist.

In praktischer Ausgestaltung ist ferner bevorzugt vorgesehen, zwischen der Speichereinrichtung zum Ablegen der einzelnen Prozessstruktur-Informationen und den die einzelnen Teilprozesse durchzuführenden Prozessoreinrichtungen als Schnittstelle ein Netzwerk derart bereitzustellen, dass es in vorteilhafter Weise den im wesentlichen vollständigen Transport der einzelnen Prozessstruktur-Informationen und der darin enthaltenen Daten entsprechend organisiert, wodurch eine weitergehende Dezentralisierung der Prozess- und/oder Systemstruktur einschließlich der physikalischen Struktur einer Gesamtanlage, in welcher der Prozess zu organisieren ist, ermöglicht wird. Von Vorteil ist hierbei ferner, dass je nach Prozess- und/oder Anwendungsgebiet ein entsprechend geeignetes Netzwerk einschließlich dessen Zugriffsmechanismen frei anpassbar ist und und/oder mit weiteren Netzwerken in Verbindung stehen kann, wie dies beispielsweise bereits heute bei einem Intranet und/oder Internet verwirklicht ist.

Zur Optimierung insbesondere des Datentransports sowie einer im wesentlichen automatisierten Verteilung von abgerufenen Prozessstruktur-Informationen, sieht die Erfindung in praktischer Weiterbildung ferner vor, ein frei konfigurierbare Bussystem für den zu organisierenden Datentransport bereitzustellen.

Um in im wesentlichen für jede Organisationsphase den Zugriff auf ausgewählte Prozessstruktur-Informationen sicherzustellen, ist ferner vorgesehen, dass diese Informationen an ausgewählten Benutzerplattformen abrufbar sind. Je nach benutzerabhängiger Weiterverwendung dieser Informationen können die Benutzerplattformen hierbei rein passiv ausgebildet sein, um beispielsweise eine reine Visualisierung zu unterstützen und/oder können als interaktive Benutzerplattformen ausgebildet sein, die benutzer- beziehungsweise personalspezifisch eine weitere Bearbeitung der Informationen, beispielsweise eine Programmierung oder Wartung einzelner Teilprozesse unterstützen. Hierdurch können im wesentlichen alle am Prozess beteiligten, unabhängig von den jeweiligen realen physikalischen Gegebenheiten des zu organisierenden Prozesses ihren jeweiligen speziellen Part wesentlich einfacher erkennen, besser organisieren und/oder an ihre Anforderungen entsprechend anpassen sowie ihren jeweiligen Aufgaben entsprechend eingreifen.

Ein erfindungsgemäßes, zu einer derartigen Organisation eines Prozesses geeignetes, System umfasst hierzu wenigstens eine Prozesseinrichtung sowie eine der Prozesseinrichtung zugeordnete Steuerungseinrichtung, eine programmierbare Prozessoreinrichtung zum Identifizieren und/oder Zugreifen von Teilprozess-spezifischen Prozessstruktur-Informationen, wenigstens eines Speichervorrichtung sowie ein zwischen diesen Einrichtungen als Schnittstelle ausgebildetes Netzwerk.

In vorteilhafter Weiterbildung ist darüber hinaus vorgesehen, dass eine als Aktor ausgebildete Prozesseinrichtung zusätzlich eine Sensoreinrichtung beinhaltet, welche die Funktion des Aktors im Prozess beobachtet und infolge eine Dokumentation, Visualisierung, Diagnostizierung und/oder anhand der gewonnen Daten eine Simulation auswählbarer Teilprozesse durchführbar ist.

In praktischer Ausgestaltung ist von der Erfindung ferner vorgesehen, dass die einzelnen Prozessstruktur-Informationen zum individuellen Abrufen und/oder automatischen Verteilen an die jeweiligen, die einzelnen Teilprozesse durchzuführenden Prozeseinrichtungen innerhalb des Netzwerkes entsprechend dem Zeitverhalten des durchzuführenden Prozesses parametrisiert unter einer Identifizierungskennung erfass- und speicherbar sind.

Die Erfindung sieht insbesondere aus Kostengründen darüber hinaus Ausgestaltungen vor, bei denen die den einzelnen Prozesseinrichtungen zugeordneten Steuerungseinrichtungen anstelle von intelligenten Prozesseinrichtungen als zusätzliche Steuerelemente bereitgestellt sind, da im Wesentlichen aufgrund der herkömmlicherweise bereits vorhandenen Prozessorleistungen der hierdurch erforderliche Kostenanteil gegenüber einer intelligenten Prozesseinrichtung wesentlich geringer einzuschätzen ist.

Umfasst das den Datentransport organisierende Netzwerk einen frei konfigurierbaren Bus, so ist sichergestellt, dass je nach Anwendungsgebiet beziehungsweise prozessspezifischen Aufgaben eine entsprechend geeignete Synchronisations- und Projektierungsfunktionalität erzielbar ist.

Ein entsprechendes, erfindungsgemäßes Applikationsbeziehungsweise Computerprogramm umfasst insbesondere eine Programmeinheit zum Identifizieren, Speichern und/oder Abrufen von Prozessstruktur-Informationen und/oder zum insbesondere automatischen Zuführen von Prozessstruktur-Informationen an die entsprechenden Prozesseinrichtungen beziehungsweise den jeweils zugeordneten Steuereinrichtungen.

Die Erfindung wird nachfolgend anhand einer beispielhaften netzwerkweiten Applikation unter Bezugnahme auf die beigefügten Zeichnungen im einzelnen beschrieben.

Es zeigen:
Fig. 1. eine stark vereinfachte Prinzipskizze einer erfindungsgemäßen beispielhaften Ausführungsform der Organisation eines Prozesses innerhalb eines netzwerkweiten Systems und
Fig. 2. ein vereinfachtes Blockbild betreffend das Verteilen verschiedener innerhalb von Applikationsprogrammen definierter Prozessstruktur-Informationen an die jeweiligen den entsprechenden Teilprozess durchzuführenden Prozesseinrichtungen.

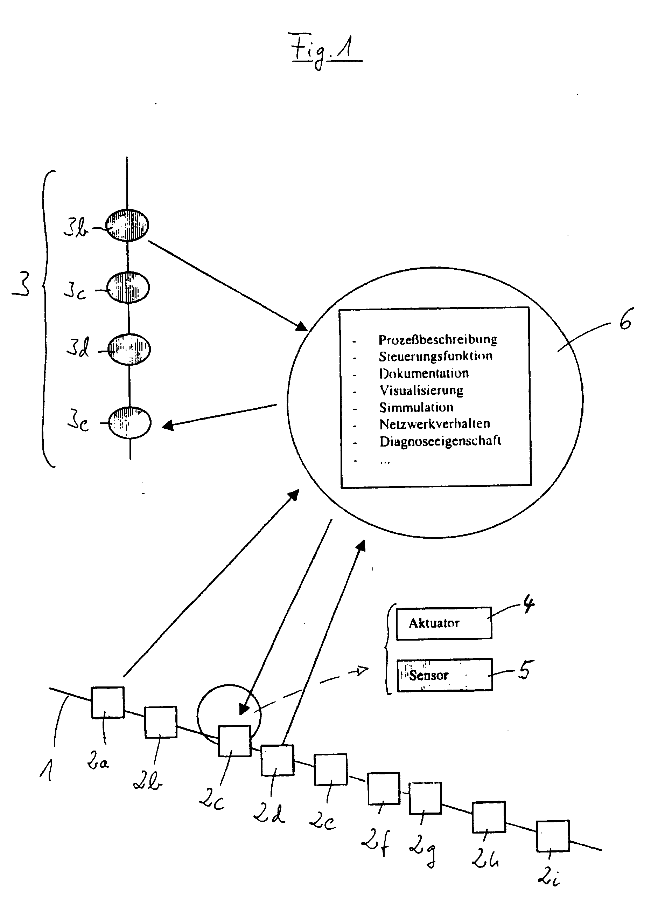

Nachfolgend wird zunächst auf Fig. 1 Bezug genommen, welches ein System mit einer Vielzahl von über ein Netzwerk 1 miteinander verbundenen Prozesskomponenten 2a bis 2i zur Durchführung eines eine Anzahl von Teilprozessen 3b bis 3e umfassenden Gesamtprozess 3 darstellt. Jede der Prozesskomponenten 2a bis 2e umfasst zur Durchführung von ihnen zugewiesenen Teilprozesse entsprechend angepasste Prozesseinrichtungen, von denen beispielhaft ein Aktuator 4 sowie ein Sensor 5 als herausgelöste Blöcke zu dargestellt sind.

Das erfindungsgemäße Organisationsprinzip geht nun entgegen den bisherigen Ansätzen davon aus, dass die in dem System integrierten Aktor- und Sensorelemente 4 beziehungsweise 5 in das Gesamtsteuerungskonzept des zu organisierenden Prozesses 3 einzubinden sind.

So nimmt das Sensorelement 5 einerseits einen immer gewichtigeren Kostenfaktor, insbesondere bei der Planung und/oder Kalkulation eines Systems ein, was im wesentlichen durch den immer weiter steigenden Informationsbedarf begründet ist. Andererseits beeinflusst ein solches Sensorelement 5 infolge der sich weiter entwickelnden Technologien in stark wachsendem Maße gewichtige Kennzeichnungsfaktoren von gegenwärtigen und zukünftigen Maschinenanlagen und Systeme, insbesondere in Bezug auf deren Quantitäts-, Flexibilitäts-, Qualitäts- und/oder Sicherheitscharakteristika.

Ein, wie bei Fig. 1 beispielhaft mit der Bezugsziffer 4 belegter Aktor bildet jedoch darüber hinaus das eigentliche Kernelement eines jeden Systems, da er durch seine spezielle Funktion im Prozess, wie beispielsweise das Ausführen eines speziellen Teilprozesses, bei welcher ferner im Regelfall beobachtet beziehungsweise überwacht wird, durch seine herkömmlicherweise geringere Anzahl gegenüber eingesetzten Seonsorelementen und üblicherweise durch seine Wirkungsweise, beispielsweise als Leistungsschalter für Stellglieder einschließlich anderer zum Beispiel auf Pneumatik, Hydraulik und/oder Wärme basierender Medien, und/oder als Bewegungssteuerung beispielsweise für geregelte oder nicht geregelte Antriebe zur Führung beziehungsweise Rückführung oder Positionierung definiert ist.

Erfindungsgemäß bildet der Aktor 4 somit den Ausgangspunkt der Prozessorganisation, dass heisst unabhängig von der Netzwerkstruktur beginnt die Projektierung und Dokumentation eines Prozesses bei der Aktorik. Hierzu ist unter Bezugnahme auf Fig. 1 zunächst eine systematische Strukturierung jedes einzelnen Teilprozesses, für welchen ein Aktor 4 vorgesehen ist, vorzunehmen. Eine solche systematische Strukturierung 6 umfasst gemäß vorliegendem Ausführungsbeispiel insbesondere eine Analysierung des Prozesses einschließlich der Beschreibung des jeweiligen Teilprozesses, jeweils durchzuführende Steuerungsfunktionen, eine anwendungsspezifische Dokumentation sowie geeignete Visualisierungparameter und gegebenenfalls Parameter zur Simulation mittels eines Modells, ferner die Berücksichtigung netzwerkspezifischen Verhaltens insbesondere im Hinblick auf das Zeitverhalten sowie die Diagnoseeigenschaften. Derartige, in praktischer Anwendung insbesondere auch unter dem Gesichtspunkt einer systemischen-Sicherheit erfassten Prozessstruktur-Informationen 6 werden anschließend für die Ansteuerung entsprechender hierfür benötigter Prozesseinrichtungen parametrisiert und in einzelnen Applikationsprogrammen festgelegt. Die einzelnen Teilprozess-spezifischen Informationen 6 sind somit über den Prozessverlauf, wobei im wesentlichen eine Verknüpfung zusammengehörender Teilschritte vorgenommen wird, beispielsweise dass gemäß Fig. 1 der Teilprozess 3c nach Durchführung des Teilprozesses 3b und/oder auf diesen basierend jedoch vor Durchführung des Teilprozesses 3d auszuführen ist, ferner über eine physikalische Zuordnung, beispielsweise dass die zur Durchführung des Teilprozesses 3e vorgesehene Prozesskomponente 2d im Netzwerk zwischen der Prozesskomponente 2c und 2e eingebunden ist sowie über eine logische Zuordnung, beispielsweise ob und wie der Aktor 4 und/oder der Sensor 5 angesprochen wird, welche Variablen hierzu eingelesen beziehungsweise ausgegeben werden sowie entsprechende netzwerkspezifische Parameter, wie insbesondere das Zeitverhalten eindeutig beschrieben.

Anhand dieser aufgrund der individuellen Strukturelemente eindeutigen Beschreibung von im Wesentlichen jedem einzelnen Teilprozess ist folglich während jeder Organisationsphase, dass heisst im wesentlichen beginnend bei der Planung über die Erstellung und Projektierung einschließlich der hierfür erforderlichen Parametrisierung, Programmierung und Simulation bis hin zum Betreiben des Gesamtprozesses 3 eine autonome Bearbeitung jeder einzelnen Prozessstruktur-Information 6 aber auch in Kombination sichergestellt, wodurch durchgängig eine zentrale bis hin zu einer rein dezentral aufgebauten Systemstruktur unterstützt ist.

Diese Prozessstruktur-Informationen 6 werden unter system- und/oder netzwerkspezifischen Identifizierungskennungen jederzeit abrufbar gespeichert, wobei das Abrufen und automatische Verteilen an die jeweiligen Prozesskomponenten 2a bis 2i während eines Prozessbetriebs, wie nachfolgend ausführlicher beschrieben, insbesondere über die in den einzelnen Prozessstruktur-Informationen 6 enthaltenen Verknüpfungsdaten automatisch erfolgt.

Infolge der Verteilung dieser parametrisierten Strukturinformationen 6 an die jeweiligen Prozesseinrichtungen, wird der Aktuator 4 beziehungsweise der Sensor 5 folglich mit einer eigenen Intelligenz ausgestattet, so dass eine übergeordnete Steuerung im wesentlichen überflüssig wirkt.

Es sei hierbei erwähnt, dass je nachdem, inwieweit beispielsweise der Aktor 4 mit einer eigenen Intelligenz ausgebildet ist, für den Fall, dass eine Verknüpfung von mehreren Informationen nötig ist, ein entsprechendes diese Informationen enthaltene Applikationsprogramm direkt in dessen eigene, integrierte Steurereinheit geladen, oder in eine diesem spezifisch zusätzlich zugeordnete Steuereinheit, wie beispielsweise einen weiteren Aktor oder einen Konzentrator geladen wird.

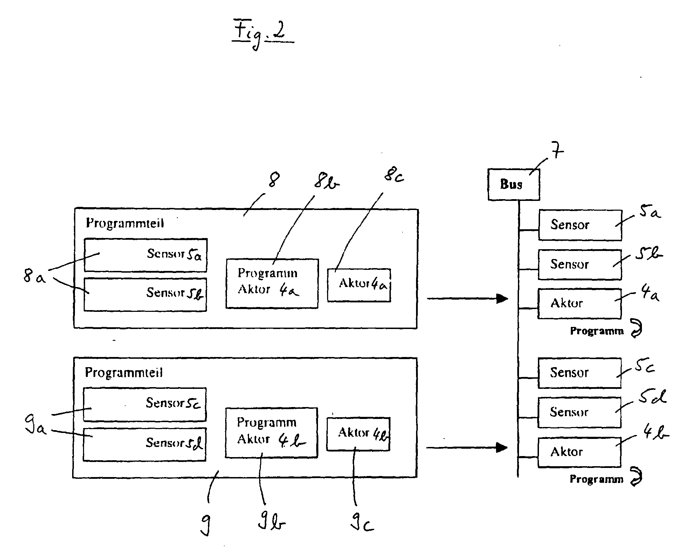

Ein derartiges Laden und automatisches Verteilen entsprechender Programme 8, 9 ist beispielhaft bei Fig. 2 dargestellt. Ein frei konfigurierbarer Bus 7 stellt in diesem Fall die Ein-/Ausgangsschnittstelle für die einzelnen Prozesseinrichtungen, gemäß Fig. 2 einem ersten Aktor 4a mit zwei diesem zugeordneten Sensoren 5a und 5b sowie einem zweiten Aktor 4b mit zwei diesem zugeordneten Sensoren 5c und 5d, bereit. Zur Durchführung der jeweiligen dem Aktor 4a beziehungsweise dem Aktor 4b zugewiesenen Teilprozesse beinhalten die jeweiligen abzurufenden beziehungsweise zu ladenden Applikationsprogramme 8 beziehungsweise 9 entsprechende Informationen 8a, 9a für die Ein- und/oder Ausgänge der dem jeweiligen Aktor 4a und 4b zugewiesenen Sensoren 5a, 5b beziehungsweise 5c, 5d, die zur Teilprozessdurchführung notwendigen parametrisierten Funktions- beziehungsweise Tätigkeitsabläufe 8b, 9b sowie die zum automatischen Verteilen entsprechenden physikalischen und/oder logischen Zuordnungen 8c, 9c in Bezug auf den Aktor 4a beziehungsweise 4b. Das Netzwerk beziehungsweise der Bus 7 bei Fig. 2 organisiert hierbei im wesentlichen lediglich den Transport dieser Prozessstruktur-Informationen 6 und stellt mit entsprechend geeigneten beziehungsweise anwendungsspezifischen Werkzeugen, Hard- und Softwaremechanismen und/oder Organisationsregeln für den reellen Betrieb die grundlegende Synchronisations- und Projektierungsfunktionalität sicher.

Bei Einbindung eines neuen oder zu ersetzenden Teilprozesses, beispielsweise des Teilprozesses 3b gemäß Fig. 1, beziehungsweise der hierfür entsprechend vorgesehen Prozesskomponente 2c mit der Aktuator- und Sensoreinrichtung 4 bzw. 5 müssen diese somit lediglich dem Netzwerk angeschlossen werden und die entsprechenden vorstehend beschriebenen Prozessstruktur-Informationen 6 über den Bus 7 in die Steuereinheit des Aktors 4 beziehungsweise in die ihm zugeordnete Steuereinheit geladen werden, um beispielsweise den neu eingefügten Teilprozess 3e durchzuführen. Aufgrund der, wie bereits vorstehend erwähnt, durch die Erfindung nunmehr dezentral ausgelegten Steuerungsintelligenz, die eine übergeordnete Intelligenz beziehungsweise Gesamtsteuerung des Systems beziehungsweise des Prozesses im wesentlichen überflüssig macht, unterstützt die Erfindung netzwerkweite beziehungsweise auch netzwerkübergreifende Applikationen selbst für rein dezentral aufgebaute Systemstrukturen während im wesentlichen jede Organisationsphase.

Infolge der systematischen Strukturierung der einzelnen, durchzuführenden Funktionen beziehungsweise Tätigkeiten ist ferner im wesentlichen jeder am Prozess beteiligte, dass heisst vom Prozesstechniker bis hin zum Bedienungs- bzw. Wartungspersonal in der Lage über entsprechende mit dem Netzwerk verbundene Benutzerplattformen seinen speziellen Part einfacher zu erkennen, besser zu organisieren und den jeweiligen Anforderungen entsprechend weiter zu bearbeiten beziehungsweise anzupassen. Durch die Bündelung und Konzentrierung der Prozess- und Systeminformationen auf die jeweiligen, den Gesamtprozess beeinflussenden Prozesseinrichtungen unterstützt die Erfindung die Prozessorganisation somit während jeder Phase und im wesentlichen unabhängig davon, ob die eingesetzte Software und Hardware, einschließlich der verwendeten Maschinen und Anlagen zentral, dezentral oder gemischt strukturiert sind.

## Patentansprüche

1. Verfahren zur Organisation eines Prozesses (3, 3b-3e) mit wenigstens einer Prozesseinrichtung (2a-2i, 4, 4a, 4b, 5, 5a-5d) zur Durchführung vorgebbarer Teilprozesse (3b-3e) **gekennzeichnet durch** folgende Schritte:
a) Erfassen von Teilprozess-spezifischen Prozessstruktur-Informationen (6) in Abhängigkeit des zu organisierenden Prozesses (3, 3b-3e),
b) Ablegen der Prozessstruktur-Informationen (6) in wenigstens einer Speichereinrichtung,
c) in Abhängigkeit vorgebbarer Teilprozesse (3b-3e) Abrufen von abgelegten Prozessstruktur-Informationen (6),
d) Nutzen der abgerufenen Prozessstruktur-Informationen (6) basierend auf einer jeweiligen, insbesondere auswählbaren Organisationsphase.

2. Verfahren nach Anspruch 1, ferner **dadurch gekennzeichnet, dass** das Schritt a) das Erfassen von zugeordneten Teilprozessen (3b-3e) und/oder von physikalischen und/oder logischen Zuständen der den spezifischen Teilprozess (3b-3e) durchzuführenden Prozesseinrichtung (2a-2i, 4, 4a, 4b, 5, 5a-5d) umfasst.

3. Verfahren nach Anspruch 1 oder 2, ferner **dadurch gekennzeichnet, dass** Schritt d) das insbesondere automatische Zuführen zu einer den entsprechenden Teilprozess (3b-3e)durchzuführenden Prozesseinrichtung (2a-2i, 4, 4a, 4b, 5, 5a-5d) zugeordneten Steuerungseinrichtung zum Steuern der Prozesseinrichtung beinhaltet.

4. Verfahren nach Anspruch 3, **dadurch gekennzeichnet, dass** die Schritte c) und/oder d) durch ein als Schnittstelle zwischen der Speichereinrichtung und der Prozesseinrichtung (2a-2i, 4, 4a, 4b, 5, 5a-5d) fungierendes Netzwerk (1, 7) durchgeführt werden.

5. Verfahren nach einem der Ansprüche 1 bis 4, **dadurch gekennzeichnet, dass** Schritt c) und d) unter Nutzung eines frei konfigurierbaren Bus-Systems (7) durchgeführt werden.

6. Verfahren nach einem der Ansprüche 1 bis 4, ferner **dadurch gekennzeichnet, dass** unter Schritt d) auswählbare Prozessstruktur-Informationen (6) an eine Benutzerplattform zur Benutzerabhängigen Weiterverwendung bereitgestellt werden.

7. System zur Organisation eines Prozesses, insbesondere nach einem Verfahren gemäß einem der vorstehenden Ansprüche, umfassend:
- wenigstens eine Prozesseinrichtung (2a-2i, 4, 4a, 4b, 5, 5a-5d) zur Durchführung eines vorgebbaren Teilprozesses (3b-3e),
- eine der wenigstens einen Prozesseinrichtung (2a-2i, 4, 4a, 4b, 5, 5a-5d) zugeordnete Steuerungseinrichtung,
- wenigstens eine programmierbare Prozessoreinrichtung zum Identifizieren und/oder Abrufen von Teilprozess-spezifischen Prozessstruktur-Informationen (6) in Abhängigkeit des zu organisierenden Prozesses,
- wenigstens eine Speichervorrichtung in welcher die Prozessstruktur-Informationen ablegbar sind,
- ein Netzwerk (1, 7), welches als Schnittstelle zwischen der Prozesseinrichtung (2a-2i, 4, 4a, 4b, 5, 5a-5d), der Speichereinrichtung und der programmierbaren Prozessoreinrichten ausgebildet ist.

8. System nach Anspruch 7, **dadurch gekennzeichnet, dass** die Prozesseinrichtung (2a-2i, 4, 4a, 4b, 5, 5a-5d) einen Aktuator (4, 4a, 4b) umfasst, dem eine Sensoreinrichtung (5, 5a-5d) zugeordnet ist.

9. System nach Anspruch 7 oder 8, **dadurch gekennzeichnet, dass** die Anbindung einer Prozesseinrichtung automatisch unter Ansprechen auf eine abgerufene Prozessstruktur-Information (6) und entsprechendem Laden der jeweiligen Prozessstruktur-Information (6) in eine der Prozesseinrichtung (2a-2i, 4, 4a, 4b, 5, 5a-5d) zugeordneten Steuereinrichtung erfolgt.

10. System nach Anspruch 9, **dadurch gekennzeichnet, dass** die Steuereinrichtung Teil der Prozessoreinrichtung (2a-2i, 4, 4a, 4b, 5, 5a-5d) ist.

11. System nach Anspruch 9, **dadurch gekennzeichnet, dass** der Prozessoreinrichtung (2a-2i, 4, 4a, 4b, 5, 5a-5d) eine zusätzliche Steuereinrichtung Teil zugeordnet ist.

12. System nach einem der Ansprüche 7 bis 11, **dadurch gekennzeichnet, dass** das Netzwerk (1, 7) einen frei konfigurierbaren Bus (7) insbesondere mit wenigstens einer Schnittstelle zum Verbinden eines Anschlussnetzwerkes umfasst.

13. System nach einem der Ansprüche 7 bis 12, **dadurch gekennzeichnet, dass** die Prozessstruktur-Informationen (6) unter einer Identifizierungskennung erfassbar, speicherbar und abrufbar sind.

14. System nach einem der Ansprüche 7 bis 13, **dadurch gekennzeichnet, dass** das System eine dezentrale Struktur besitzt.

15. System nach einem der Ansprüche 7 bis 14, **dadurch gekennzeichnet, dass** die wenigstens eine Prozessoreinrichtung (2a-2i, 4, 4a, 4b, 5, 5a-5d) mit wenigstens einer Benutzerplattform zum Benutzerspezifischen Berarbeiten von auswählbaren Prozessstruktur-Informationen (6) in Verbindung steht.

16. Computerprogramm zur Durchführung eines Verfahrens nach einem der Ansprüche 1 bis 6, insbesondere innerhalb eines Systems nach einem der Ansprüche 7 bis 15, **gekennzeichnet durch** ein Programmeinheit
- zum Identifizieren, Speichern und/oder Abrufen von einem Teilprozess (3b-3e) und einer zur Ausführung vorgesehenen Prozesseinrichtung (2a-2i, 4, 4a, 4b, 5, 5a-5d) zuordenbaren Prozessstruktur-Informationen (6) und/oder
- zum Zuführen ausgewählter Prozessstruktur-Informationen (6) an die jeweils zugeordneten Prozesseinrichtungen (2a-2i, 4, 4a, 4b, 5, 5a-5d) insbesondere unter Ansprechen auf innerhalb der Prozessstruktur-Informationen (6) enthaltenen Strukturelementen.
